# EUROPÄISCHE PATENTSCHRIFT

(11) **EP 3 116 816 B1**
(45) Veröffentlichungstag und Bekanntmachung des Hinweises auf die Patenterteilung: **03.01.2018**
(21) Anmeldenummer: 15715658.9
(22) Anmeldetag: 09.03.2015
(51) Int. Cl.: B65H 57/14, B66D 3/00, E21B 19/22

(54) **VORRICHTUNG ZUM FÖRDERN VON LANGGESTRECKTEN GEGENSTÄNDEN**
DEVICE FOR CONVEYING ELONGATE OBJECTS
DISPOSITIF DE TRANSPORT D'OBJETS ALLONGÉS

(30) Priorität: 11.03.2014 AT 1742014
(43) Veröffentlichungstag der Anmeldung: 18.01.2017
(73) Patentinhaber: Rosendahl Nextrom GmbH, 8212 Pischelsdorf (AT)
(72) Erfinder: HÖRSCHLÄGER, Werner, A-8054 Pirka (AT); BERGHOFER, Alfred, A-7564 Dobersdorf (AT); SCHLACHER, Karl, A-9431 St. Stefan (AT)
(74) Vertreter: Beer & Partner Patentanwälte KG
(86) Internationale Anmeldenummer: PCT/AT2015/000035
(87) Internationale Veröffentlichungsnummer: WO 2015/135008

(56) Entgegenhaltungen:
- DE-B- 1 059 644
- US-A- 5 775 417

## Beschreibung

Die Erfindung betrifft eine Vorrichtung mit den Merkmalen des einleitenden Teils des unabhängigen Anspruches 1.

Derartige Vorrichtungen sind bekannt (DE 2 235 350 A).

Bei der aus der DE 2 235 350 A bekannten Vorrichtung werden die endlosen Zugeinrichtungen über Zahnräder, die in die Zugeinrichtungen von innen her eingreifen, angetrieben. Die Zahnräder ihrerseits werden über Untersetzungsgetriebe und Wellen von einem Motor angetrieben. Dabei wirken auf die Spannbacken, die an den Zugeinrichtungen vorgesehen sind, aber ungünstige Kippmomente ein.

Weitere Vorrichtungen zum Fördern von langgestrecktem Gut, wie Rohre oder Kabel, sind aus der DE 26 31 723 A und aus der US 5,775,417 A bekannt.

Problematisch bei bekannten Vorrichtungen ist es, wenn die mit Spannbacken bestückten Ketten über die Umlenkräder angetrieben werden. Dies hat ungünstige mechanische Verhältnisse zur Folge. Der Erfindung liegt die Aufgabe zugrunde, eine verbesserte Vorrichtung der eingangs genannten Gattung ("Spannbackenabzug") zur Verfügung zu stellen.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Da bei der Erfindung der Antrieb für die Ketten, die mit Spannbacken bestückt sind, an den Ketten unmittelbar angreift, ergeben sich günstigere Hebelverhältnisse und es kann eine bessere Synchronisation der beiden Ketten des Spannbackenabzuges erreicht werden.

Bei der Erfindung ist vorgesehen, dass für den Antrieb Ketten, insbesondere Ketten in Form von Rollenketten, vorgesehen sind, die mit den Ketten, die mit Spannbacken bestückt sind, gekuppelt sind.

Die Kupplung erfolgt über gezahnte Leisten, die an den die Spannbacken tragenden Kettengliedern befestigt sind, und in welche die Ketten des Antriebes eingreifen.

Für den Antrieb der mit den Spannbacken bestückten Ketten, ist jeder mit Spannbacken bestückten Kette ein gesonderter Antrieb in Form einer Kette, z.B. eine Rollenkette, zugeordnet.

Die als Ketten ausgebildeten Antriebe der mit den Spannbacken bestückten Ketten, können auf an sich beliebige Art und Weise miteinander synchronisiert sein.

So kann vorgesehen sein, dass die Antriebe miteinander durch eine elektrische Welle synchronisiert sind.

Bei der Erfindung ist vorgesehen, dass die Ketten als Antriebe für die mit Spannbacken auf beiden Seiten der mit Spannbacken bestückten Ketten vorgesehen sind. Dabei können auf jeder Seite je eine Kette, die mit beiden mit Spannbacken bestückten Ketten gekuppelt ist, oder auf jeder Seite zwei Ketten, vorgesehen sein, von welchen jede mit einer mit Spannbacken bestückten Ketten gekuppelt ist.

Der erfindungsgemäße Antrieb ist einfacher und weniger störanfällig als ein Antrieb über die Umlenkräder der mit Spannbacken bestückten Ketten.

In einer Ausführungsform der erfindungsgemäßen Vorrichtung sind die Umlenkräder im Maschinengestell der erfindungsgemäßen Vorrichtung fest gelagert.

Der für den Transport des langgestreckten Gegenstandes erforderliche Kraftschluss zwischen Spannbacken und zu förderndem Gegenstand wird erreicht, indem wenigstens eine der Führungsschienen, an welchen die Innenseiten der geradlinigen Trume der beiden mit Spannbacken bestückten Ketten anliegen, beispielsweise mit Hilfe von pneumatischen Mitteln, wie Faltenbälgen, auf das geradlinige Trum der gegenüberliegenden mit Spannbacken bestückten Kette hin gedrückt wird.

Weitere Einzelheiten und Merkmale der Erfindung ergeben sich aus der nachstehenden Beschreibung eines Ausführungsbeispieles anhand der Zeichnungen. Es zeigt:

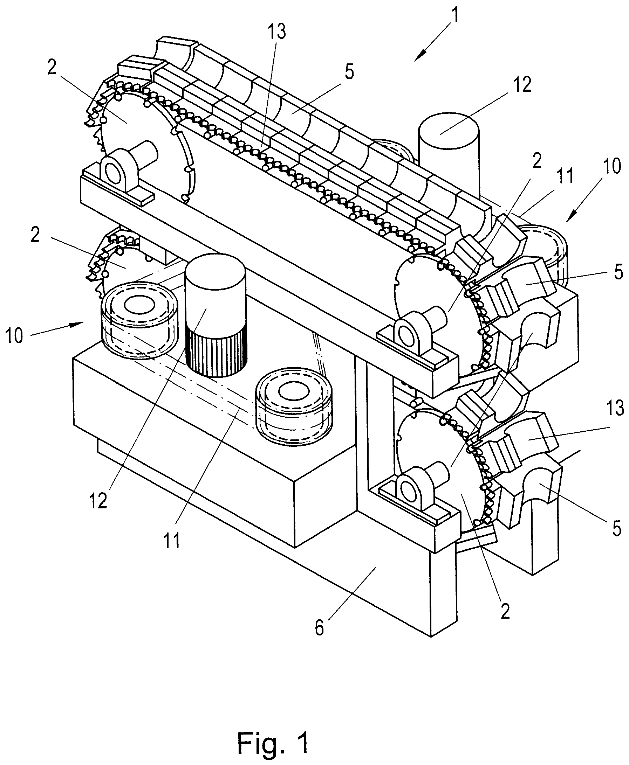

- Fig. 1: eine erfindungsgemäße Vorrichtung in Schrägansicht und
- Fig. 2: eine erfindungsgemäße Vorrichtung in Seitenansicht (ohne Antrieb).

Eine erfindungsgemäße Vorrichtung 1 zum Fördern von langgestreckten Gegenständen, insbesondere von Rohren oder Kabeln, umfasst zwei endlose, über Umlenkräder 2 geführte Ketten 3, 4. Jede der Ketten 3, 4 ist mit einer Reihe von Spannbacken 5 bestückt. Die Spannbacken 5 liegen in den geradlinigen Abschnitten (Trumen) der Ketten 3, 4 im Wesentlichen spielfrei aneinander an. Die Spannbacken 5 liegen an dem zu fördernden, langgestreckten Gegenstand (Rohr oder Kabel) an und werden gegen den Gegenstand gepresst, so dass der für das Fördern des Gegenstandes erforderliche Reibschluss zwischen Spannbacken 5 und Gegenstand gegeben ist.

Die mit Spannbacken 5 bestückten Ketten 3, 4 der erfindungsgemäßen Vorrichtung 1 laufen über die nicht angetriebenen, also freilaufenden Umlenkräder 2, die im Maschinengestell 6 fix montiert sind.

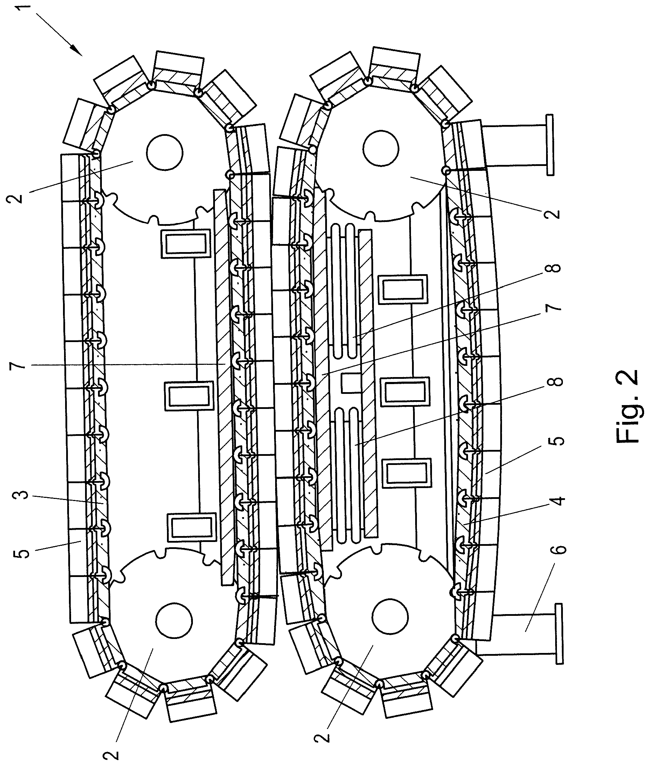

Den einander benachbarten, geradlinigen Trumen (vgl. Fig. 2) der mit Spannbacken 5 bestückten Ketten 3, 4 sind Führungen 7 zugeordnet, die an den Innenseiten der Ketten 3, 4 anliegen.

Hierbei ist im Rahmen der Erfindung bevorzugt vorgesehen, dass eine der Führungen 7, im gezeigten Ausführungsbeispiel die Führung 7, des geradlinigen Trums der oberen mit Spannbacken 5 bestückten endlosen Kette 3 im Maschinengestell 6 fix montiert ist.

Die Führung 7 für die untere, mit Spannbacken 5 bestückten Kette 4 ist mit Hilfe von mit unter Druck stehendem Gas (Luft) beaufschlagbaren Faltenbälgen 8 auf das geradlinige Trum der oberen, mit Spannbacken 5 bestückten Kette 3 hin belastet. Damit wird der erforderliche Reibschluss zwischen dem zu fördernden, langgestreckten Gegenstand und den Spannbacken 5, der für das problemlose und gleichmäßige Fördern des langgestreckten Gegenstandes erforderlich ist, erreicht.

Im gezeigten Ausführungsbeispiel sind den Ketten 3, 4 auf einander bezüglich der Ketten 3, 4 gegenüberliegenden Seiten, also auf beiden Seiten der Ketten 3, 4 angeordnete Antriebe 10 zugeordnet. Jeder der Antriebe 10 umfasst eine mehrläufige Rollenkette 11, der ein Antriebsmotor 12 zugeordnet ist. Die Antriebsmotore 14 der beiden Antriebe 10 sind miteinander (elektrisch) gekuppelt. An den seitlichen Flächen der Glieder, der mit Spannbacken 5 bestückten Ketten 3, 4, sind gezahnte Leisten 13 angeordnet, in welche die Rollenkette 11 eingreift, sodass die mit Spannbacken 5 bestückten Ketten 3, 4 synchron angetrieben werden. Die Ketten 11 der Antriebe 10 greifen in den geradlinigen Trumen der mit Spannbacken 5 bestückten Ketten 3, 4, also in dem Bereich, in dem die Spannbacken 5 aneinander bzw. am zu fördernden Gegenstand anliegen, ein.

Die erfindungsgemäße Konstruktion erlaubt es, dass die gezahnten Leisten 13 im Wesentlichen in der Mitte der Spannbacken 5 angeordnet sind, sodass sich günstige Hebelverhältnisse ergeben und durch die Antriebe 10 auf die Spannbacken 5 keine Kippmomente auftreten.

Da, wie im gezeigten Ausführungsbeispiel beide mit Spannbacken 5 bestückten Ketten 3,4 von einem gemeinsamen Antrieb 10 mit je einer mehrläufigen Rollenkette 11 angetrieben werden, ist eine synchrone Bewegung der mit Spannbacken 5 bestückten Ketten 3, 4 gewährleistet.

Zusammenfassend kann ein Ausführungsbeispiel der Erfindung wie folgt beschrieben werden.

Eine als Spannbackenabzug ausgebildete Vorrichtung 1 zum Fördern länglicher Gegenstände umfasst zwei mit Spannbacken 5 bestückte Ketten 3, 4. Die Ketten 3, 4 werden von zwei Antrieben 10 angetrieben. Jeder der Antriebe 10 umfasst eine endlose Rollenkette 11, in die an den mit Spannbacken 5 bestückten Ketten 3, 4 befestigte, gezahnte Leisten 13 eingreifen. Die Rollenketten 11 der Antriebe 10 sind mit den geraden, aneinander anliegenden Trumen der mit Spannbacken 5 bestückten Ketten 3, 4 gekuppelt.

## Patentansprüche

1. Vorrichtung (1) zum Fördern von langgestreckten Gegenständen, insbesondere Rohren oder Kabeln, mit zwei endlosen über Umlenkräder (2) geführten Ketten (3, 4), die mit Spannbacken (5) bestückt sind, und mit einem Antrieb (10) für die Ketten (3, 4), **dadurch gekennzeichnet, dass** der Antrieb (10) endlose Ketten (11) umfasst, dass jede mit den Spannbacken (5) bestückte Kette (3, 4) mit einer Kette (11) als Antrieb gekuppelt ist, dass die Ketten (11) der Antriebe (10) auf beiden Seiten der mit Spannbacken (5) bestückten Ketten (3, 4) angeordnet sind und dass auf beiden Seiten der mit den Spannbacken (5) bestückten Ketten (3, 4) gezahnte Leisten (13) angeordnet sind, die in die Ketten (11) des Antriebes (10) eingreifen.

2. Vorrichtung nach Anspruch 1, **dadurch gekennzeichnet, dass** die Ketten (11) des Antriebes (10) mit geradlinigen und zueinander im Wesentlichen parallel ausgerichteten Trumen der mit Spannbacken (5) bestückten Ketten (3, 4) gekuppelt sind.

3. Vorrichtung nach Anspruch 1 oder 2, **dadurch gekennzeichnet, dass** die Ketten (11) des Antriebes (10), insbesondere mehrläufige, Rollenketten (11) sind.

4. Vorrichtung nach einem der Ansprüche 1 bis 3, **dadurch gekennzeichnet, dass** die Ketten (11) des Antriebes (10) bezüglich der Ebene, in der die Spannbacken (5) im Bereich der geradlinigen Trum der Ketten (3, 4) aneinander liegen, symmetrisch angeordnet sind.

5. Vorrichtung nach einem der Ansprüche 1 bis 4, **dadurch gekennzeichnet, dass** die gezahnten Leisten (13), welche die Ketten (11) des Antriebes (10) mit den mit Spannbacken (5) bestückten Ketten (3, 4) kuppeln, an den Seitenflächen der Spannbacken (5) angeordnet sind.

6. Vorrichtung nach einem der Ansprüche 1 bis 5, **dadurch gekennzeichnet, dass** die geradlinigen, einander zugekehrten Trume der mit Spannbacken (5) bestückten Ketten (3, 4) durch Führungen (7) geführt sind, und dass eine der Führungen (7) quer zu den geradlinigen Trumen verstellbar ist.

7. Vorrichtung nach Anspruch 6, **dadurch gekennzeichnet, dass** der verstellbaren Führung (7) ein pneumatischer Verstellantrieb, insbesondere wenigstens ein Faltenbalg (8), zugeordnet ist.

8. Vorrichtung nach einem der Ansprüche 1 bis 6, **dadurch gekennzeichnet, dass** die Ketten (11) des Antriebes (10) als zwei- oder mehrläufige Ketten ausgebildet sind, und dass je ein Lauf der Ketten (11) des Antriebs (10) mit einer mit Spannbacken (5) bestückten Kette (3, 4) gekuppelt ist.

9. Vorrichtung nach einem der Ansprüche 1 bis 8, **dadurch gekennzeichnet, dass** die Umlenkräder (2) für die mit Spannbacken (5) bestückten Ketten (3, 4) freilaufende Räder sind.

10. Vorrichtung nach einem der Ansprüche 1 bis 9, **dadurch gekennzeichnet, dass** die Umlenkräder (2) für die mit Spannbacken (5) bestückten Ketten (3, 4) maschinengestellfest gelagert sind.

11. Vorrichtung nach einem der Ansprüche 1 bis 10, **dadurch gekennzeichnet, dass** die Ketten (11) der Antriebe miteinander, beispielsweise durch eine elektrische Welle, synchronisiert sind.

## Claims

1. Device (1) for conveying elongate objects, in particular pipes or cables, having two endless chains (3, 4) guided via deflection pulleys (2), which are equipped with clamping jaws (5), and having a drive (10) for the chains (3, 4), **characterized in that** the drive (10) comprises endless chains (11), each chain (3, 4) equipped with the clamping jaws (5) is coupled to a chain (11) as the drive, the chains (11) of the drives (10) are arranged on both sides of the chains (3, 4) equipped with clamping jaws (5), and toothed bars (13), which engage in the chains (11) of the drive (10), are arranged on both sides of the chains (3, 4) equipped with the clamping jaws (5).

2. Device according to Claim 1, **characterized in that** the chains (11) of the drive (10) are coupled to strands, which are linear and aligned essentially in parallel to one another, of the chains (3, 4) equipped with clamping jaws (5).

3. Device according to Claim 1 or 2, **characterized in that** the chains (11) of the drive (10) are roller chains (11), in particular multitrack roller chains.

4. Device according to any one of Claims 1 to 3, **characterized in that** the chains (11) of the drive (10) are arranged symmetrically with respect to the plane in which the clamping jaws (5) press against one another in the region of the linear strand of the chains (3, 4).

5. Device according to any one of Claims 1 to 4, **characterized in that** the toothed brackets (13), which couple the chains (11) of the drive (10) to the chains (3, 4) equipped with clamping jaws (5), are arranged on the lateral faces of the clamping jaws (5).

6. Device according to any one of Claims 1 to 5, **characterized in that** the linear strands facing toward one another of the chains (3, 4) equipped with clamping jaws (5) are guided by guides (7), and one of the guides (7) is adjustable transversely in relation to the linear strands.

7. Device according to Claim 6, **characterized in that** a pneumatic adjustment drive, in particular at least one folded bellows (8), is associated with the adjustable guide (7).

8. Device according to any one of Claims 1 to 6, **characterized in that** the chains (11) of the drive (10) are designed as two-track or multitrack chains, and one track of the chains (11) of the drive (10) is coupled to each chain (3, 4) equipped with clamping jaws (5).

9. Device according to any one of Claims 1 to 8, **characterized in that** the deflection pulleys (2) for the chains (3, 4) equipped with clamping jaws (5) are freewheeling pulleys.

10. Device according to any one of Claims 1 to 9, **characterized in that** the deflection pulleys (2) for the chains (3, 4) equipped with clamping jaws (5) are mounted fixed on the machine frame.

11. Device according to any one of Claims 1 to 10, **characterized in that** the chains (11) of the drives are synchronized with one another, for example, by an electrical shaft.

## Revendications

1. Dispositif (1) pour le transport d'objets allongés, en particulier de tuyaux ou de câbles, avec deux chaînes (3, 4) sans fin guidées sur des roues de renvoi (2), qui sont équipées de mors de serrage (5), et avec un entraînement (10) pour les chaînes (3, 4), **caractérisé en ce que** l'entraînement (10) comprend des chaînes (11) sans fin, **en ce que** chaque chaîne (3, 4) munie des mors de serrage (5) est couplée à une chaîne (11) servant d'entraînement, **en ce que** les chaînes (11) des entraînements (10) sont disposées de part et d'autre des chaînes (3, 4) munies des mors de serrage (5) et **en ce que** sont disposées de part et d'autre des chaînes (3, 4) munies des mors de serrage (5) des barres dentées (13) qui se mettent en prise dans les chaînes (11) de l'entraînement (10).

2. Dispositif selon la revendication 1, **caractérisé en ce que** les chaînes (11) de l'entraînement (10) sont couplées avec des brins rectilignes et sensiblement parallèles les uns aux autres avec les chaînes (3, 4) munies de mors de serrage (5).

3. Dispositif selon la revendication 1 ou 2, **caractérisé en ce que** les chaînes (11) de l'entraînement (10) sont des chaînes à rouleaux (11), en particulier à plusieurs rangs.

4. Dispositif selon l'une des revendications 1 à 3, **caractérisé en ce que** les chaînes (11) de l'entraînement (10) sont disposées de façon symétrique par rapport au plan dans lequel les mors de serrage (5) reposent l'un sur l'autre au niveau des brins rectilignes des chaînes (3, 4).

5. Dispositif selon l'une des revendications 1 à 4, **caractérisé en ce que** le barres dentées (13) qui couplent les chaînes (11) de l'entraînement (10) avec les chaînes (3, 4) munies de mors de serrage (5) sont disposées sur les surfaces latérales des mors de serrage (5).

6. Dispositif selon l'une des revendications 1 à 5, **caractérisé en ce que** les brins rectilignes tournés les uns vers les autres des chaînes (3, 4) munies de mors de serrage (5) sont guidés par des guides (7) et **en ce que** l'un des guides (7) peut être déplacé transversalement par rapport aux brins rectilignes.

7. Dispositif selon la revendication 6, **caractérisé en ce que** le guide déplaçable (7) est associé à un entraînement de déplacement pneumatique, en particulier au moins un soufflet (8).

8. Dispositif selon l'une des revendications 1 à 6, **caractérisé en ce que** les chaînes (11) de l'entraînement (10) sont réalisées comme des chaînes à deux ou plusieurs rangs et **en ce que** chaque rang des chaînes (11) de l'entraînement (10) est couplé à une chaîne (3, 4) munie de mors de serrage (5).

9. Dispositif selon l'une des revendications 1 à 8, **caractérisé en ce que** les roues de renvoi (2) pour les chaînes (3, 4) munies de mors de serrage (5) sont des chaînes à rotation libre.

10. Dispositif selon l'une des revendications 1 à 9, **caractérisé en ce que** les roues de renvoi (2) pour les chaînes (3, 4) munies de mors de serrage (5) sont supportées de façon fixe sur le bâti de la machine.

11. Dispositif selon l'une des revendications 1 à 10, **caractérisé en ce que** les chaînes (11) des entraînements sont synchronisées entre elles, par exemple par un arbre électrique.
